# FASCICULE DE BREVET EUROPEEN

(11) **EP 3 410 907 B1**
(45) Date de publication et mention de la délivrance du brevet: **16.10.2019**
(21) Numéro de dépôt: 17707619.7
(22) Date de dépôt: 02.02.2017
(51) Int. Cl.: A47J 36/00, A47J 27/00, G01B 21/32, G01N 25/18, G01K 1/02, G01N 33/03

(54) **PROCÉDÉ DE DÉTERMINATION D'UN INDICE DE PERFORMANCE D'UN RÉCIPIENT DE CUISSON REPRÉSENTATIF DE L'HOMOGÉNÉITE DE TEMPÉRATURE**
VERFAHREN ZUR BESTIMMUNG DES LEISTUNGSINDEX EINES KOCHGEFÄSSES MIT ANZEIGE DER HOMOGENITÄT DER TEMPERATUR
METHOD FOR DETERMINING A PERFORMANCE INDEX OF A COOKING VESSEL REPRESENTATIVE OF THE HOMOGENEITY OF TEMPERATURE

(30) Priorité: 04.02.2016 FR 1650916
(43) Date de publication de la demande: 12.12.2018
(73) Titulaire: SEB S.A., 69130 Ecully (FR)
(72) Inventeur: HOFLEITNER, Céline, 74000 Annecy (FR)
(74) Mandataire: Bourrières, Patrice
(86) Numéro de dépôt international: PCT/FR2017/050237
(87) Numéro de publication internationale: WO 2017/134390

(56) Documents cités:
- WO-A1-2014/147319
- BE-A1- 904 460
- DE-A1-102010 027 833
- US-A1- 2015 208 845

## Description

La présente invention concerne un procédé de détermination d'un indice de performance d'un récipient de cuisson soumis à une puissance de chauffe générée par des moyens de chauffe, ledit indice étant représentatif de la capacité dudit récipient de cuisson à répartir la puissance de chauffe de manière homogène dans tout le récipient de cuisson au cours du temps nécessaire pour cuire des aliments, le récipient de cuisson étant notamment une casserole, une sauteuse ou un faitout.

On connait du document WO2014147319 un procédé de détermination d'un indice de performance d'un récipient de cuisson.

Les récipients de cuisson vendus dans le commerce présentent, dans une même famille, une construction technique très différente d'un récipient de cuisson à l'autre, mais qui n'est pas visible par le consommateur. Ainsi, ils présentent une forme extérieure relativement similaire et le consommateur a peu d'éléments pour comparer et apprécier la performance de cuisson de deux ou plusieurs récipients de cuisson.

Par exemple, une casserole de diamètre 20 centimètres peut être fabriquée à partir une feuille d'acier inoxydable, à partir d'une feuille d'aluminium, à partir d'une feuille issue d'un assemblage de plusieurs couches, notamment d'acier inoxydable, d'aluminium ou de cuivre. Lorsque le récipient de cuisson est posé sur des moyens de chauffe qui fournissent une puissance de chauffe pour cuire les aliments contenus dans le récipient de cuisson, la répartition de la puissance dans le récipient de cuisson au cours du temps sera plus ou moins homogène en fonction de la construction technique.

L'homogénéité de la répartition de la puissance de chauffe dans le temps va se traduire par des écarts de température plus ou moins importants entre les points les plus chauds et les points les plus froids du récipient de cuisson. Ainsi, plus les écarts de température seront faibles, plus la qualité de la cuisson des aliments sera bonne.

Le but de la présente invention est de proposer pour un récipient de cuisson donné, un procédé de détermination d'un indice de performance représentatif de la capacité dudit récipient de cuisson à répartir la puissance de chauffe de manière homogène dans tout le récipient de cuisson au cours du temps et ainsi de permettre au consommateur de comparer la performance de cuisson de deux récipients de cuisson de constructions différentes.

Un autre but de l'invention est de proposer un procédé qui soit simple et économique à mettre en oeuvre.

Ces buts sont atteints avec un procédé de détermination d'un indice de performance d'un récipient de cuisson soumis à une puissance de chauffe générée par des moyens de chauffe, ledit indice étant représentatif de la capacité dudit récipient de cuisson à répartir la puissance de chauffe de manière homogène dans tout le récipient de cuisson au cours du temps nécessaire pour cuire des aliments, ledit récipient de cuisson comprenant un fond et une paroi latérale munie d'une face externe, caractérisé en ce qu'il comprend les étapes suivantes :
a) soumettre le fond du récipient de cuisson aux moyens de chauffe mis en marche à une puissance de chauffe déterminée, l'échauffement du fond entrainant une élévation de la température de la face externe de la paroi latérale,
b) mesurer et enregistrer à intervalle de temps régulier la température en au moins trois points d'altitude prédéterminée de la face externe pendant la chauffe du récipient de cuisson jusqu'à la stabilisation d'au moins une des températures mesurées,
c) calculer et enregistrer au cours du temps de montée en température de la face externe la différence entre la température maximale et la température minimale mesurée à chaque intervalle de temps au niveau des au moins trois points.
d) déterminer l'indice de performance à partir des calculs et enregistrements réalisés à l'étape c).

A l'étape d) de l'invention, selon une première alternative, on détermine la différence la plus grande parmi les différences entre la température maximale et la température minimale enregistrées à chaque intervalle de temps à l'étape c), l'indice de performance du récipient de cuisson étant égal à la dite différence la plus grande.

Cette disposition permet de déterminer facilement et simplement un indice de performance pertinent.

A l'étape d) de l'invention, selon une deuxième alternative, on calcule la moyenne des différences entre la température maximale et la température minimale enregistrées à chaque intervalle de temps au cours de la montée de température de la face externe, l'indice de performance du récipient de cuisson étant égal à la moyenne.

Cette disposition permet de déterminer un indice de performance qui prend en compte les écarts de température durant toute la montée en température du récipient de cuisson.

La demanderesse a mis en évidence qu'un indice de performance basé sur la mesure de température sur la face externe de la paroi latérale était aussi pertinent qu'un indice de performance basé sur la mesure de température sur une face interne du récipient, notamment de la paroi latérale.

La mesure de la température sur la face externe de la paroi latérale est facile à mettre en oeuvre, notamment si le récipient de cuisson contient des aliments. En effet, la face externe est facilement accessible pour la mise en place de moyens de mesure.

La mesure et l'enregistrement de la température en au moins trois points d'altitude prédéterminée de la face externe permettent, notamment dans le cas où le récipient de cuisson contient des aliments visqueux, de s'affranchir de perturbations du type mouvement de convection dans le récipient.

Avantageusement, à l'étape b), les trois points de mesure de la température sont alignés sur un axe vertical.

Les récipients de cuisson étant généralement cylindriques, l'axe vertical représente une ligne de progression du flux thermique. Ainsi, la mesure dans le temps de la température en au moins trois points le long de l'axe vertical permet de connaitre la progression du flux thermique.

De préférence, à l'étape b), on met en oeuvre trois sondes de températures en contact avec la face externe, reliées à une centrale d'acquisition de mesures.

Cette disposition permet de mettre en oeuvre des composants très économiques, chaque sonde de température comportant un capteur de température, notamment une CTN ou un thermocouple qui sont des composants du commerce. Par CTN, on comprend une thermistance à Coefficient de Température Négatif.

Avantageusement, à l'étape b), on met en oeuvre un dispositif de mesure de la température sans contact de la face externe, notamment une caméra thermique. Cette disposition permet de mettre en oeuvre de manière rapide le procédé pour plusieurs récipients de cuisson, une fois la caméra thermique paramétrée. Cette disposition permet aussi d'augmenter le nombre de points de mesure ou d'avoir une mesure et analyse sur une surface donnée.

De préférence, avant l'étape a), le récipient de cuisson est rempli au deux tiers de sa capacité, notamment par un fluide visqueux.

Cette disposition permet de déterminer un indice de performance dans des conditions proches des conditions d'utilisation.

Avantageusement, à l'étape b), la face externe de la paroi verticale est divisée verticalement en 3 parties égales, les trois points de mesure de température correspondant au centre de chaque partie selon un axe vertical.

De préférence, à l'étape b), l'intervalle de temps pour mesurer et enregistrer la température est de une seconde.

Un tel intervalle de temps est suffisamment court pour bien enregistrer la progression de la température le long de la face externe de la paroi latérale.

Avantageusement, le récipient de cuisson est une casserole, une sauteuse ou un faitout.

Le procédé est particulièrement bien adapté à de tels récipients de cuisson dont la paroi latérale présente une hauteur supérieure à 30% du diamètre du fond.

L'invention sera mieux comprise à l'étude du mode de réalisation pris à titre nullement limitatif et illustré dans les figures annexées dans lesquelles :
- La figure 1 illustre une vue schématique en coupe d'un récipient de cuisson selon un premier mode particulier de réalisation de l'invention.
- La figure 2 illustre une vue schématique en coupe d'un récipient de cuisson selon un second mode particulier de réalisation de l'invention.
- La figure 3 illustre un graphique de l'évolution des trois températures mesurées et de la puissance en fonction du temps pour un récipient de cuisson comportant une couche en acier inoxydable et une couche en aluminium.
- La figure 4 illustre un graphique de l'évolution des trois températures mesurées et de la puissance en fonction du temps pour un récipient de cuisson comportant une couche en acier inoxydable.

On notera que, dans ce document, les termes «horizontal», «vertical», «inférieur», «supérieur», «haut», «bas», employés pour décrire le récipient de cuisson, font référence à ce récipient de cuisson en situation d'usage, lorsqu'il est posé sur des moyens de chauffe ou sur un plan horizontal.

Le procédé mis en oeuvre permet de déterminer un indice de performance d'un récipient de cuisson 1a, 1b soumis à la puissance de chauffe générée par des moyens de chauffe 20. Cet indice est représentatif de la capacité du récipient de cuisson 1a, 1b à répartir la puissance de chauffe de manière homogène dans tout le récipient de cuisson au cours du temps nécessaire pour cuire des aliments.

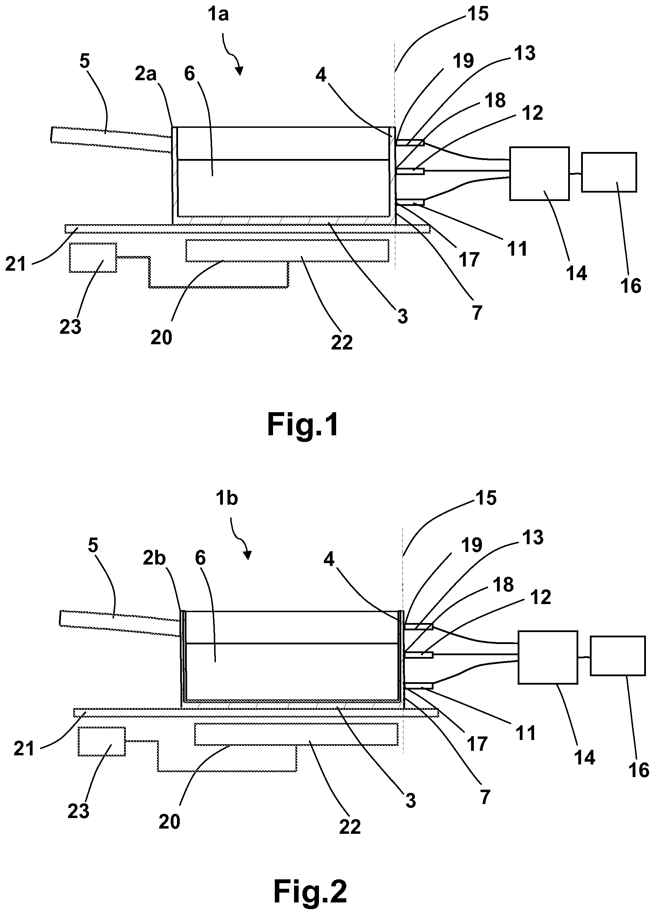

Tel que visible aux figures 1 et 2, le procédé est mis en oeuvre pour déterminer l'indice de performance d'un premier 1a et second 1b récipients de cuisson de même taille : une casserole de diamètre 20 centimètres, mais qui présentent deux constructions différentes. Le premier récipient de cuisson 1a comporte une calotte 2a réalisée en une couche d'acier inoxydable d'épaisseur 0,6 millimètre, par exemple par frappe d'une feuille d'acier inoxydable. Le second récipient de cuisson 1b comporte une calotte 2b réalisée en deux couches superposées: une couche d'acier inoxydable d'épaisseur 0,6 millimètre et une couche d'aluminium d'épaisseur 2 millimètres. Les premier 1a et second 1b récipients de cuisson comportent un fond comprenant une plaque d'aluminium encapsulée dans une coupelle en acier inoxydable rapporté par frappe (non illustré sur les figures).

Chaque calotte 2a, 2b comprenant un fond 3 et une paroi latérale 4 munie d'une poignée 5. Chaque récipient de cuisson 1a, 1b est rempli au deux tiers de sa capacité par un liquide visqueux 6, par exemple de la soupe.

Chaque récipient de cuisson 1a, 1b repose sur les moyens de chauffe 20, notamment à résistances chauffantes électrique, qui comprennent une plaque vitrocéramique 21, un dispositif de chauffe 22, notamment un pot chauffant, et un dispositif de commande 23.

La paroi latérale 4 de chaque récipient de cuisson 1a, 1b comporte une face externe 7 sur laquelle sont agencés trois sondes de température 11, 12, 13 reliées à une centrale d'acquisition de mesures 14. Les trois sondes de température 11, 12, 13 comportent chacune un capteur de température formé par un thermocouple. La face externe 7 de la paroi verticale 4 est divisée verticalement en 3 parties égales, les sondes de température 11, 12, 13 sont positionnées, respectivement, en un point 17, 18, 19 correspondant au centre de chaque partie selon un axe vertical 15. La centrale d'acquisition de mesures 14 est reliée à un ordinateur 16.

Le procédé comprend les étapes suivantes :
a) soumettre le fond 3 du récipient de cuisson 1a, 1b aux moyens de chauffe 20 mis en marche à une puissance de chauffe de 600 Watts à l'aide du dispositif de commande 23, l'échauffement du fond 3 entrainant une élévation de la température de la face externe 7 de la paroi latérale 4,
b) mesurer avec les trois sondes 11, 12, 13 et enregistrer toutes les secondes la température aux trois points 17, 18, 19 d'altitude prédéterminée de la face externe 7 pendant la chauffe du récipient de cuisson 1a, 1b jusqu'à la stabilisation d'au moins une des températures mesurées,
c) calculer et enregistrer au cours du temps de montée en température de la face externe 7 la différence entre la température maximale et la température minimale mesurée à chaque intervalle de temps au niveau des trois points.
d) déterminer la différence la plus grande parmi les différences entre la température maximale et la température minimale enregistrées à chaque intervalle de temps, l'indice de performance du récipient de cuisson 1a, 1b étant égal à cette différence la plus grande.

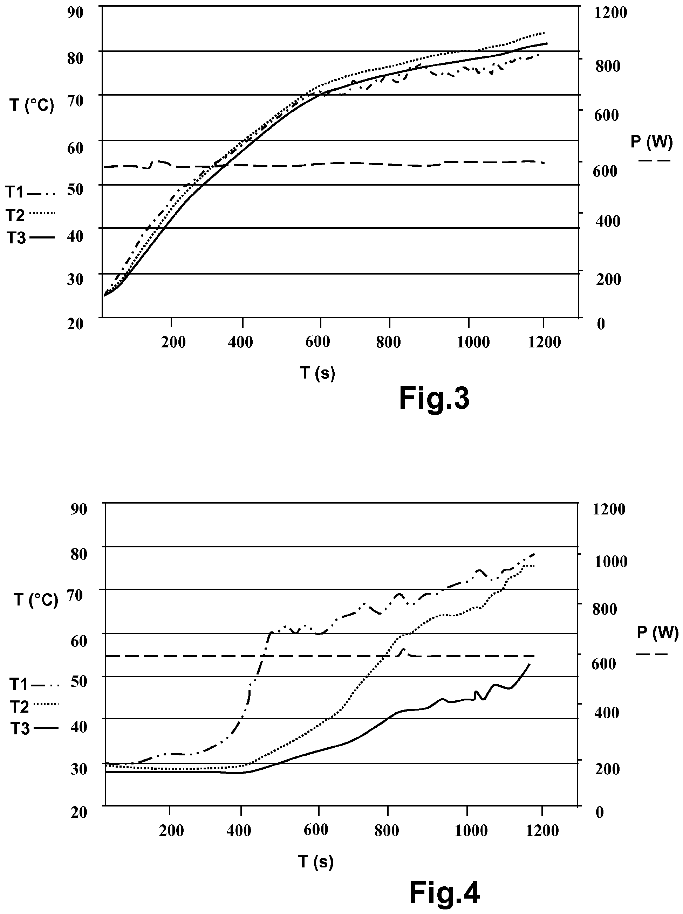

Les figures 2 et 3 illustrent chacune un graphique des enregistrements réalisés par la centrale d'acquisition de mesures 14 lors de la mise en oeuvre du procédé pour, respectivement, le premier 1a et le second 1b récipient de cuisson. Pour chaque graphique, l'axe horizontal représente le temps en secondes, l'axe vertical à droite représente la température mesurée sur la face externe 7 en degré Celsius et l'axe vertical gauche représente la puissance de chauffe à laquelle est soumis le fond 3 du récipient de cuisson 1a, 1b.

Chaque graphique comporte une courbe correspondant à l'enregistrement de la puissance de chauffe. On peut ainsi vérifier que la puissance de chauffe à laquelle est soumis le fond 3 du récipient de cuisson 1a, 1b est bien constante et égale à 600 Watts.

Chaque graphique comporte également trois courbes correspondant à l'enregistrement des trois sondes de températures 11, 12, 13: la courbe référencée T1 correspond à la sonde de température 11 placée en bas de la face externe 7, la courbe référencée T2 correspond à la sonde de température 12 placée au milieu de la face externe 7 et la courbe référencée T3 correspond à la sonde de température 13 placée en haut de la face externe 7.

La centrale d'acquisition de mesures 14 mesure et enregistre la température mesurée par les trois sondes pendant la chauffe du récipient de cuisson jusqu'à la stabilisation d'au moins une des températures mesurées. Par stabilisation d'une température, on comprend que la température ne progresse pas de plus de 5 °C en 60 secondes.

La centrale d'acquisition de mesures 14 est reliée à un ordinateur 16 qui va enregistrer toutes les secondes au cours du temps de montée en température de la face externe de la paroi latérale, la différence entre la température maximale et la température minimale parmi les températures mesurées sur les trois sondes. Ainsi, la différence entre la température maximale et la température minimale sera choisie parmi les valeurs (T1 - T2), (T1 - T3), (T2 - T3). L'indice de performance du récipient de cuisson est égal à la différence la plus grande enregistrée au cours du temps de montée en température de la face externe 7.

Tel que visible à la figure 3, le premier récipient de cuisson 1a présente des courbes de températures groupées. L'indice de performance pour ce premier récipient de cuisson 1a est de 5, correspondant à la plus grande différence enregistrée de 5°C. Sur la figure 3, ce pic dans l'écart de température est visible entre les courbes T1 et T2 à l'instant T≈ 1000 secondes.

Tel que visible à la figure 4, le second récipient de cuisson 1b présente des courbes de températures qui évoluent très différemment. L'indice de performance pour ce second récipient de cuisson 1b est de 30, correspondant à la plus grande différence enregistrée de 30°C entre les températures mesurées par les trois sondes. Sur la figure 4, le maximum de l'écart des températures mesurées est mesuré entre les courbes T1 et T3 à l'instant T≈ 500 secondes.

On notera sur le graphique illustré par la figure 3 que les courbes se croisent et que la différence entre la température maximale et la température minimale n'est pas obtenue entre les deux mêmes courbes au cours du temps. Ceci démontre l'intérêt d'utiliser trois sondes de température pour la détermination de l'indice de performance.

Si l'on considère que le procédé mis en oeuvre sur la famille de récipients de cuisson du type casserole de diamètre 20 centimètres donne une échelle pour l'indice de performance de 3 à 50, le consommateur pourra comprendre que le premier récipient de cuisson 1a avec un indice de 5, a la capacité de très bien répartir la puissance de chauffe, de manière homogène dans tout le récipient de cuisson au cours du temps et garantit une bonne cuisson des aliments. Avec un indice de performance de 30, le consommateur pourra comprendre que le second récipient de cuisson 1b présente une capacité moyenne voire faible à répartir la puissance de chauffe.

Bien entendu, l'invention n'est nullement limitée aux modes de réalisation décrits qui n'ont été donnés qu'à titre d'exemple. Des modifications restent possibles, notamment du point de vue de la constitution des divers éléments ou par substitution d'équivalents techniques, sans sortir pour autant du domaine de protection de l'invention tel que défini par les revendications.

Ainsi, dans une variante de mise en oeuvre, on utilise des moyens de chauffage par induction pour déterminer un indice de performance d'un récipient de cuisson compatible avec un tel moyen de chauffage.

## Revendications

1. Procédé de détermination d'un indice de performance d'un récipient de cuisson (1a, 1b) soumis à une puissance de chauffe générée par des moyens de chauffe (20), ledit indice étant représentatif de la capacité dudit récipient de cuisson (1a, 1b) à répartir la puissance de chauffe de manière homogène dans tout le récipient de cuisson au cours du temps nécessaire pour cuire des aliments, ledit récipient de cuisson (1a, 1b) comprenant un fond (3) et une paroi latérale (4) munie d'une face externe (7), **caractérisé en ce qu'**il comprend les étapes suivantes :
a) soumettre le fond (3) du récipient de cuisson (1a, 1b) aux moyens de chauffe (20) mis en marche à une puissance de chauffe déterminée, réchauffement du fond (3) entrainant une élévation de la température de la face externe (7) de la paroi latérale (4),
b) mesurer et enregistrer à intervalle de temps régulier la température en au moins trois points (17, 18, 19) d'altitude prédéterminée de la face externe (7) pendant la chauffe du récipient de cuisson (1a, 1b) jusqu'à la stabilisation d'au moins une des températures mesurées,
c) calculer et enregistrer au cours du temps de montée en température de la face externe (7) la différence entre la température maximale et la température minimale mesurée à chaque intervalle de temps au niveau des au moins trois points (17, 18, 19).
d) déterminer l'indice de performance à partir des calculs et enregistrements réalisés à l'étape c), soit
- à l'étape d), on détermine la différence la plus grande parmi les différences entre la température maximale et la température minimale enregistrées à chaque intervalle de temps à l'étape c), l'indice de performance du récipient de cuisson (1a, 1b) étant égal à ladite différence la plus grande ou
- à l'étape d), on calcule la moyenne des différences entre la température maximale et la température minimale enregistrées à chaque intervalle de temps au cours de la montée en température de la face externe, l'indice de performance du récipient de cuisson étant égal à la moyenne.

2. Procédé selon la revendication 1, **caractérisé en ce qu'**à l'étape b), les trois points (17, 18, 19) de mesure de la température sont alignés sur un axe vertical (15).

3. Procédé selon l'une quelconque des revendications 1 ou 2, **caractérisé en ce qu'**à l'étape b), on met en oeuvre trois sondes de température (11, 12, 13) en contact avec la face externe (7), reliées à une centrale d'acquisition de mesures (14).

4. Procédé l'une quelconque des revendications 1 ou 2, **caractérisé en ce qu'**à l'étape b), on met en oeuvre un dispositif de mesure de la température sans contact de la face externe (7), notamment une caméra thermique.

5. Procédé selon l'une quelconque des revendications précédentes, **caractérisé en ce qu'**avant l'étape a), le récipient de cuisson (1a, 1b) est rempli au deux tiers de sa capacité, notamment par un fluide visqueux (6).

6. Procédé selon l'une quelconque des revendications précédentes, **caractérisé en ce qu'**à l'étape b) la face externe (7) de la paroi verticale (4) est divisée en 3 parties égales, les trois points (17, 18, 19) de mesure de température correspondant au centre de chaque partie selon un axe vertical (15).

7. Procédé selon l'une quelconque des revendications précédentes, **caractérisé en ce qu'**à l'étape b), l'intervalle de temps pour mesurer et enregistrer la température est de une seconde.

8. Procédé selon l'une quelconque des revendications précédentes, **caractérisé en ce que** le récipient de cuisson est une casserole, une sauteuse ou un faitout.

## Patentansprüche

1. Verfahren zum Bestimmen eines Index der Leistung eines Kochgefäßes (1a, 1b), das einer durch Heizmittel (20) erzeugten Heizleistung ausgesetzt ist, wobei der Index für die Kapazität des Kochgefäßes (1a, 1b) repräsentativ ist, um die Heizleistung während der zum Kochen von Nahrungsmitteln erforderlichen Zeit gleichmäßig in dem gesamten Kochgefäß zu verteilen, wobei das Kochgefäß (1a, 1b) einen Boden (3) und eine Seitenwand (4) umfasst, die mit einer Außenseite (7) versehen ist, **dadurch gekennzeichnet, dass** es die folgenden Schritte umfasst:
a) Aussetzen des Bodens (3) des Kochgefäßes (1a, 1b) den Heizmitteln (20), die bei einer bestimmten Heizleistung gestartet werden, wobei die Erwärmung des Bodens (3) einen Temperaturanstieg der Außenseite (7) der Seitenwand (4) bewirkt,
b) Messen und Aufzeichnen der Temperatur in regelmäßigen Zeitabständen in mindestens drei Punkten (17, 18, 19) vorgegebener Höhe der Außenseite (7) während des Aufheizens des Kochgefäßes (1a, 1b) bis zur Stabilisierung mindestens einer der gemessenen Temperaturen,
c) Berechnen und Aufzeichnen der Differenz zwischen der Maximaltemperatur und der Minimaltemperatur, die in jedem Zeitintervall auf der Höhe der mindestens drei Punkte (17, 18, 19) gemessen wird, während der Zeit des Temperaturanstiegs der Außenseite (7),
d) Bestimmen des Indizes der Leistung aus den in Schritt c) durchgeführten Berechnungen und Aufzeichnungen, wobei entweder
- in Schritt d) der größte Unterschied zwischen den Differenzen zwischen der Maximaltemperatur und der Minimaltemperatur, die zu jedem Zeitintervall in dem Schritt c) aufgezeichnet werden, bestimmt wird, wobei der Index der Leistung des Kochgefäßes (1a, 1b) gleich der größten Differenz ist, oder
- in Schritt d) der Durchschnitt der Differenzen zwischen der Maximaltemperatur und der Minimaltemperatur berechnet wird, die in jedem Zeitintervall während des Temperaturanstiegs der Außenseite aufgezeichnet werden. wobei der Index der Leistung des Kochgefäßes gleich dem Durchschnitt ist.

2. Verfahren nach Anspruch 1, **dadurch gekennzeichnet, dass** in Schritt b) die drei Punkte (17, 18, 19) zur Messung der Temperatur auf einer vertikalen Achse (15) ausgerichtet sind.

3. Verfahren nach einem der Ansprüche 1 oder 2, **dadurch gekennzeichnet, dass** in Schritt b) drei Temperatursonden (11, 12, 13) in Kontakt mit der Außenseite (7) verwendet werden, die mit einer zentralen Messwerterfassung (14) verbunden sind.

4. Verfahren nach einem der Ansprüche 1 oder 2, **dadurch gekennzeichnet, dass** in Schritt b) eine Vorrichtung zum berührungslosen Messen der Temperatur der Außenseite (7) verwendet wird, insbesondere eine Wärmekamera.

5. Verfahren nach einem der vorhergehenden Ansprüche, **dadurch gekennzeichnet, dass** das Kochgefäß (1a, 1b) vor dem Schritt a) zu zwei Dritteln seines Fassungsvermögens, insbesondere mit einer viskosen Flüssigkeit (6), gefüllt wird.

6. Verfahren nach einem der vorhergehenden Ansprüche, **dadurch gekennzeichnet, dass** in Schritt b) die Außenseite (7) der vertikalen Wand (4) in drei gleiche Teile unterteilt wird, wobei die drei Punkte (17, 18, 19) zur Messung der Temperatur der Mitte jedes Teils entlang einer vertikalen Achse (15) entsprechen.

7. Verfahren nach einem der vorhergehenden Ansprüche, **dadurch gekennzeichnet, dass** in Schritt b) das Zeitintervall zum Messen und Aufzeichnen der Temperatur eine Sekunde beträgt.

8. Verfahren nach einem der vorhergehenden Ansprüche, **dadurch gekennzeichnet, dass** das Kochgefäß ein Kochtopf, eine Bratpfanne oder ein Schmortopf ist.

## Claims

1. Method for determining a performance index of a cooking receptacle (1a, 1b) subjected to a heating power generated by heating means (20), said index representing the capacity of said cooking receptacle (1a, 1b) to distribute the heating power homogeneously throughout the whole cooking receptacle over the course of time necessary for cooking food, said cooking receptacle (1a, 1b) comprising a bottom (3) and a side wall (4) provided with an external face (7), **characterised in that** it comprises the following steps :
a) subjecting the bottom (3) of the cooking receptacle (1a, 1b) to the heating means (20) started up at a given heating power, the heating of the bottom (3) causing a rise in the temperature of the external face (7) of the side wall (4),
b) measuring and recording at regular time intervals the temperature at least three points (17, 18, 19) at a predetermined height on the external face (7) during the heating of the cooking receptacle (1a, 1b) until at least one of the measured temperatures stabilises,
c) calculating and recording, during the rise in temperature of the external face (7), the difference between the maximum temperature and the minimum temperature measured at each time interval at the at least three points (17, 18, 19),
d) determining the performance index from the calculations and recordings made at step c), that is to say
- at step d), the greatest difference is determined among the differences between the maximum temperature and the minimum temperature recorded at each time interval at step c), the performance index of the cooking receptacle (1a, 1b) being equal to said greatest difference, or
- at step d), the average is calculated of the differences between the maximum temperature and the minimum temperature recorded at each time interval during the rise in temperature of the external face, the performance index of the cooking receptacle being equal to the average.

2. Method according to claim 1, **characterised in that**, at step b), the three temperature-measurement points (17, 18, 19) are aligned on a vertical axis (15).

3. Method according to either claim 1 or claim 2, **characterised in that**, at step b), three temperature sensors (11, 12, 13) are used in contact with the external face (7), connected to a measurement-acquisition unit (14).

4. Method according to either claim 1 or claim 2, **characterised in that**, at step b), a temperature-measurement device is used without contact with the external face (7), in particular a thermal camera.

5. Method according to any of the preceding claims, **characterised in that**, before step a), the cooking receptacle (1a, 1b) is filled to two thirds of its capacity, in particular with a viscous fluid (6).

6. Method according to any of the preceding claims, **characterised in that**, at step b), the external face (7) of the vertical wall (4) is divided into three equal parts, the three temperature-measurement points (17, 18, 19) corresponding to the centre of each part on a vertical axis (15).

7. Method according to any of the preceding claims, **characterised in that**, at step b), the interval of time for measuring and recording the temperature is one second.

8. Method according to any of the preceding claims, **characterised in that** the cooking receptacle is a saucepan, a frying pan or a stewpot.
